# FASCICULE DE BREVET EUROPEEN

(11) **EP 4 296 505 B1**
(45) Date de publication et mention de la délivrance du brevet: **25.03.2026**
(21) Numéro de dépôt: 23180706.6
(22) Date de dépôt: 21.06.2023
(51) Int. Cl.: F03D 3/04, F03D 3/00

(54) **EOLIENNE À AXE VERTICAL ET CENTRALE D'ÉNERGIE**
WINDTURBINE MIT VERTIKALER ACHSE UND KRAFTWERK
VERTICAL AXIS WIND TURBINE AND POWER PLANT

(30) Priorité: 24.06.2022 FR 2206339
(43) Date de publication de la demande: 27.12.2023
(73) Titulaire: Bessault, Serge, 98845 Nouméa (NC)
(72) Inventeur: Bessault, Serge, 98845 Nouméa (NC)
(74) Mandataire: Aquinov

(56) Documents cités:
- WO-A1-2013/120250
- GR-A- 20130 100 301
- KR-A- 20120 115 612
- KR-B1- 101 777 966
- US-A- 1 708 374
- US-A1- 2014 375 060

## Description

La présente invention concerne le domaine technique des éoliennes et plus particulièrement des éoliennes à axe vertical, ainsi que des centrales d'énergie.

Dans le domaine ci-dessus, il est connu de transformer le mouvement naturel des fluides tels que le vent ou encore l'eau en énergie domestique propre au moyen d'une éolienne. L'éolienne domestique transforme par exemple l'énergie du vent, disponible gratuitement, en électricité. Un onduleur transforme le courant continu produit en courant alternatif pour l'injecter sur le réseau ou le consommer sur place.

Il existe des éoliennes comprenant une génératrice qui est l'unité de transformation d'une énergie physique rotative en énergie électrique et une turbine qui utilise l'énergie produite par le déplacement du fluide pour entrainer la génératrice. L'association turbine génératrice transforme l'énergie produite par le mouvement du fluide domestiqué en énergie électrique utilisable.

Différents types d'éoliennes existent. L'éolienne horizontale est le type d'éolienne le plus répandu. Cette éolienne capte le vent grâce à des pales assemblées sous forme d'hélice, ces pales tournant autour d'un mât horizontal. Avec ce type d'éolienne, la force des hélices en rotation permet d'actionner une génératrice située sur le haut de l'éolienne. Les inconvénients de ce type d'éoliennes sont, d'une part, le bruit qu'elles engendrent et, d'autre part, la complexité d'installation en fonction de la hauteur du mât et son faible rendement.

Il est également connu des éoliennes verticales. Contrairement à l'éolienne horizontale, l'éolienne à axe vertical tourne autour d'un mât positionné verticalement. De telles éoliennes sont conçues avec un ensemble de pales comprenant une même courbure par rapport à l'axe vertical permettant de capter le fluide. Cependant, le fluide arrive généralement dans un sens unique et ainsi plus de la moitié de la surface exposée au fluide travaille contre le sens de rotation des pales. Des éoliennes à axe verticale connues de l'art antérieur sont présentées dans les publications KR 2012 0115612 A et US 1 708 374 A.

Le principal inconvénient de ce type d'éolienne est le besoin d'un vent relativement fort pour commencer à tourner et donc à produire de l'énergie. De plus, les éoliennes verticales classiques ont un très faible rendement.

L'invention vise à pallier ces inconvénients en proposant une éolienne à axe vertical permettant de capter des fluides à mouvement faible permettant ainsi de produire de l'énergie même avec des vitesses très faibles, et présentant un rendement supérieur aux éoliennes à axe horizontal.

A cet effet l'invention concerne une éolienne à axe vertical selon la revendication 1 comprenant une génératrice comprenant un axe de rotation central définissant l'axe vertical apte à entraîner dans son mouvement rotatif un ensemble d'aimants sur un ensemble de bobines, une turbine apte à entraîner la génératrice, ladite turbine ayant la forme d'un premier anneau comprenant un ensemble de pales radiales mobiles qui s'étendent depuis la génératrice, et un périphérique ayant la forme d'un deuxième anneau entourant le premier anneau comprenant un ensemble de pales radiales fixes qui s'étendent depuis la turbine. L'association turbine et génératrice transforme l'énergie produite par le mouvement d'un fluide domestiqué en énergie électrique utilisable.

Selon l'invention, les pales mobiles sont disposées radialement avec un angle de courbure opposé aux pales radiales fixes également disposées radialement. Le rendement de l'éolienne est lié à la surface active exposée au fluide. La mise en œuvre de deux ensembles de pales radiales qui collaborent permet un meilleur rendement de la captation du fluide.

Selon l'invention, l'angle de courbure des pales radiales mobiles est progressif. L'intégralité de la surface exposée est alors optimisée pour être active.

Avantageusement, l'éolienne selon l'invention du fait de sa forme en anneau concentrique a un centre de gravité bas avec une large embase. Ainsi, ne nécessitant pas de pylône, il est très facile de mettre en œuvre une éolienne selon l'invention sur un toit.

Avantageusement la turbine et le périphérique sont éloignés de l'axe de rotation central.

Les éoliennes classiques ont leur surface aérienne définie à la valeur de puissance nominale de leur génératrice lorsque l'éolienne est exposée au vent maximum toléré avant mise en drapeau. Cette vitesse maximale est en général de 90 Km/h. Du fait de la faible vitesse de rotation de l'éolienne selon l'invention lorsqu'elle atteint sa puissance nominale, du fait de la stabilité au sol de l'éolienne et de la surface de captage illimitée réalisable, il est possible de surdimensionner l'aérien pour une même valeur de puissance nominale de telle façon que la puissance nominale de la génératrice soit obtenue au niveau de vent moyen de la zone d'implantation, soit 30Km/h. L'éolienne fournira grâce à sa régulation sa puissance nominale en continu jusqu'à des vitesses de l'ordre de 200 Km/h.

L'éolienne limite ainsi considérablement l'intermittence de sa production tout en augmentant considérablement le nombre de kilowatts produits sur une année.

Selon l'invention, les diamètres respectifs relatifs à l'emplacement des pales mobiles de l'éolienne et des aimants du rotor et les bobines du stator de la génératrice sont rapprochés. Ainsi, la génératrice est entraînée à la vitesse permettant d'atteindre au moins la tension de charge sans avoir besoin de démultiplier la vitesse de rotation de l'éolienne avec un système énergivore. La relation entre la vitesse de la masse d'air s'engouffrant dans l'éolienne et la vitesse de rotation de la génératrice est optimisée.

Selon une forme de réalisation de l'invention, la génératrice est insérée dans l'aérien de l'éolienne. Avantageusement, le couple obtenu par le bras de levier de la génératrice éloigné de l'axe de rotation de l'éolienne est ainsi optimum à des vitesses de rotation faibles et sans nuisances. Cette caractéristique est valable qu'il y ait une ou plusieurs génératrices selon l'homothétie choisie décrite ci-après.

L'éolienne selon l'invention est destinée à être posée sur un toit ou une surface plane. La génératrice étant incorporée dans l'éolienne, l'intégralité de la surface au vent est ainsi active. Contrairement aux éoliennes existantes qui captent le vent dans une section de 40°, la collaboration de forme des pales fixes et des pales mobiles permet de capter le fluide dans une section de 180°.

Selon l'invention, les pales mobiles sont disposées radialement avec un angle de courbure opposé aux pales radiales fixes également disposées radialement.

Selon l'invention, les pales radiales mobiles et fixes ont la forme d'un panneau rectangulaire présentant un profil régulier courbé et creux.

Selon une caractéristique de l'invention, les pales radiales mobiles présentent un profil plus courbé que les pales radiales fixes.

Selon une caractéristique de l'invention, le nombre de pales radiales fixes est identique au nombre de pales radiales mobiles.

Selon une forme de réalisation de l'invention, l'éolienne comprend douze pales radiales mobiles. Cette forme de réalisation avec douze pales permet de bien canaliser le flux aérien et ainsi de ne pas laisser le vent traverser l'éolienne sans en avoir prélevé toute sa puissance.

Selon l'invention, les profils mis bout à bout d'une pale radiale fixe et d'une pale radiale mobile suivent une courbe mathématique. La convergence des deux flux aériens en bout de pales mobiles et fixe élimine les résultantes négatives et contribuent à augmenter la pression qui pousse la pale grâce à la force centrifuge qu'exercent les molécules du fluide sur l'intrados des pales mobiles.

Selon l'invention, les profils mis bout à bout d'une pale radiale fixe et d'une pale radiale mobile suivent une courbe mathématique convexe continue. La forme courbée continue permet d'obtenir le meilleur rendement pour la captation du vent qui s'engouffre dans l'éolienne. L'angle de courbure des pales radiales est progressif et non constant pour préserver la vitesse de la masse d'air ainsi guidée. Et, la continuité de ce dévoiement progressif est maintenue lors du passage d'une pale radiale fixe à une pale radiale mobile avec un angle de courbure inversé volontairement.

Selon l'invention, le profil des pales radiales mobiles présentent un angle de courbure progressif plus important que le profil des pales radiales fixes. Ainsi, le plan de la pale radiale fixe sur l'axe médian de l'éolienne est parfaitement aligné avec la direction du vent pour ne constituer aucun obstacle ou résultante négative à l'avancée de la masse d'air qui est captée par l'éolienne.

De plus, les points d'extrémités des profils des pales radiales sont alignés avec le centre de l'éolienne.

De ce fait, la résultante des forces appliquée sur l'intrados de la pale radiale fixe augmente progressivement pour être minime sur tout son parcours le long de l'intrados de la pale radiale fixe et être au maximum au centre de l'intrados de la pale radiale mobile. L'aspect exponentiel de la progression de l'angle de courbure des pales radiales concentre les résultantes appliquées sur l'intrados des pales radiales au point contribuant de manière optimum à la rotation de la turbine de l'éolienne.

En d'autres termes, les molécules du fluide subissent progressivement une accélération de la force centrifuge et exercent une poussée croissante sur l'intrados des pales pour délivrer l'intégralité de leur énergie cinétique avant d'être orientées vers leur point de départ. Ces molécules vont emprunter un virage progressif de180°.

La mise en œuvre d'une telle architecture et organisation des pales radiales fixes et mobiles permet un dévoiement progressif de la masse d'air évoluant sur un axe linéaire pour lui faire adopter une trajectoire circulaire. Avantageusement, il est ainsi possible de récupérer l'intégralité de l'énergie cinétique de la masse d'air qui s'engouffre dans l'éolienne. Ainsi, la collecte d'énergie de la surface de captage de l'éolienne est optimisée. Selon une autre caractéristique de l'invention, l'écartement entre deux pales successives correspond à la distance obtenue pour le point le plus haut de ladite courbe.

Afin de contrer le phénomène Venturi, des trous d'évacuation sur le plateau supérieur de la turbine sont prévus. Le plateau supportant le haut des pales radiales mobiles est ajouré en son centre afin de faciliter l'échappement des flux d'air compressés au centre de la turbine. L'air rentrant dans la turbine s'échappe naturellement de la turbine par l'espace laissé entre les pales après avoir fait trois quart de tour. Mais son évacuation est freinée par le relief des pales radiales opposées à l'axe d'entrée. Il en résulte une augmentation de la pression au centre de la turbine. Ainsi des écopes d'extraction sont apposées au plateau supérieur. L'air chassé s'évacue soit par l'espace créé entre le couvercle et le plateau mobile soit par des ajournement effectués dans le couvercle.

Selon une forme de réalisation de l'invention, les pales radiales mobiles et fixes ont la même longueur et sensiblement la même hauteur.

Selon une variante de réalisation, l'éolienne comprend en outre une extension formant une structure autour du périphérique et comprenant des pales supplémentaires fixes dans la continuité de chacune des pales radiales fixes. L'ajout d'une extension à l'ensemble permet d'augmenter la surface de captage des flux de fluides. Les extensions sont pensées individuellement de façon à exploiter au mieux les mouvements des fluides de chaque implantation.

L'invention concerne également une centrale d'énergie selon la revendication 7 comprenant un ensemble de pales radiales fixes et mobiles montées sur un rail d'une turbine circulaire, ledit rail circulant sur un chemin de roues munies chacune d'une génératrice. Une telle centrale d'énergie repose sur le même principe qu'une éolienne selon l'invention avec des dimensions plus importantes et un nombre plus élevé de génératrices décentrées. Une centrale selon l'invention peut avantageusement être placée entourant une zone qui nécessite un apport d'énergie électrique.

La centrale d'énergie selon l'invention est une homothétie de l'éolienne revendiquée.

La turbine de l'éolienne selon l'invention comprend des pales radiales mobiles qui entraînent une ou plusieurs génératrices disposées horizontalement ou verticalement. L'entraînement se fait de manière connue, par une couronne crantée boulonnée sur la génératrice et un rail circulaire cranté attenant à la partie inférieure de la turbine. Ce dispositif permet notamment le branchement en série des génératrices pour optimaliser le « tracking » des onduleurs.

Pour contrer le phénomène Venturi, la centrale d'énergie est à ciel ouvert.

Bien entendu, les différentes caractéristiques, variantes et formes de réalisation de l'invention peuvent être associées les unes avec les autres selon diverses combinaisons dans la mesure où elles ne sont pas incompatibles ou exclusives les unes des autres.

De plus, diverses autres caractéristiques de l'invention ressortent de la description annexée effectuée en référence aux dessins qui illustrent des formes, non limitatives, de réalisation de l'invention et où :
[Fig.1] est une vue en perspective d'une éolienne selon l'invention,
[Fig.2] est une vue en perspective en transparence de l'éolienne de la figure 1,
[Fig.3] est une vue d'un détail de l'éolienne et notamment la génératrice de la figure 1,
[Fig.4] est une vue en coupe de l'éolienne de la figure 1 présentant un plan de coupe DD',
[Fig.5] est une vue de la coupe selon DD',
[Fig.6] est une vue en perspective d'un exemple de réalisation d'une pale mobile selon l'invention,
[Fig.7] est une vue en perspective d'un exemple de réalisation d'une pale fixe selon l'invention,
[Fig.8] est une vue schématique de la courbe permettant l'obtention des exemples de pales selon l'invention,
[Fig.9] est une vue schématique partielle du fonctionnement d'une éolienne selon l'invention,
[Fig.10A] est une vue schématique d'un exemple de réalisation d'une éolienne comprenant une extension,
[Fig.10B] est une vue schématique d'un autre exemple de réalisation d'une éolienne comprenant une extension,
[Fig.10C] est une vue schématique d'un autre exemple de réalisation d'une éolienne comprenant une extension,
[Fig.11] est une vue en perspective en transparence d'un exemple de réalisation d'une centrale selon l'invention,
[Fig.12] est une vue en perspective d'un détail de la centrale de la figure 11, et
[Fig.13] est une vue schématique de différentes dispositions de génératrices pour une centrale selon l'invention.

Il est à noter que sur ces figures les éléments structurels et/ou fonctionnels communs aux différentes variantes peuvent présenter les mêmes références.

L'invention vise à augmenter le rendement d'une éolienne à axe vertical. A cet effet, l'invention propose la mise en œuvre de deux ensembles de pales radiales mobiles et fixes dont les angles de courbure collaborent et accroissent l'efficacité de l'éolienne.

L'éolienne selon l'invention est compatible avec un fluide tel que l'air mais également avec l'eau dans le cas où l'éolienne est immergée.

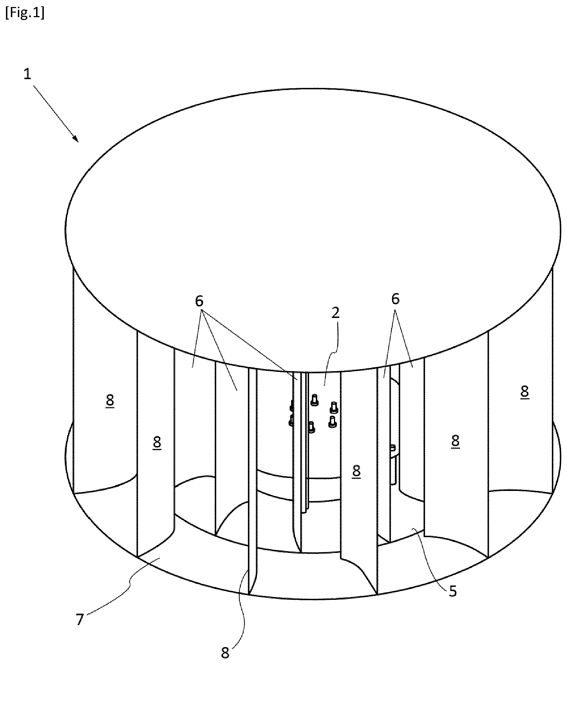

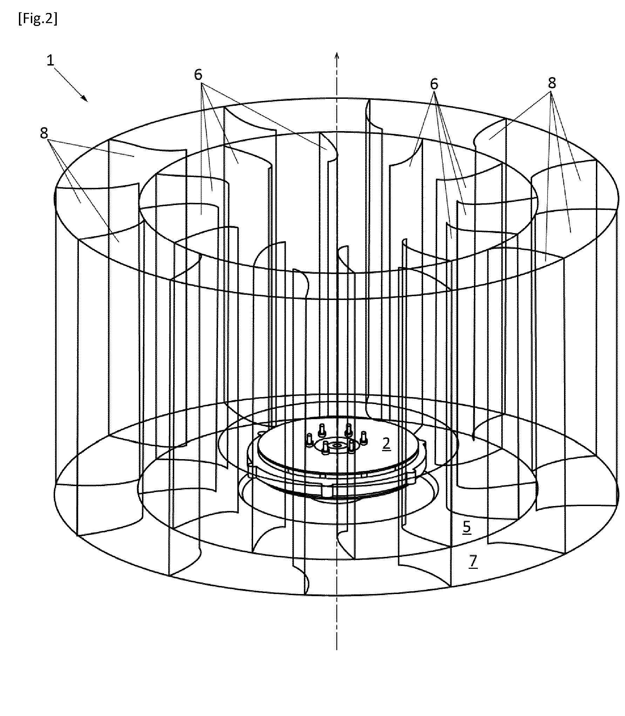

Une éolienne à axe verticale selon l'invention, telle qu'illustrée aux figures 1 et 2 et désignée dans son ensemble par la référence 1 comprend une génératrice 2 apte à entraîner dans son mouvement rotatif un ensemble d'aimants 3 (rotor) sur un ensemble de bobines 4 (stator) et une turbine 5 apte à entraîner la génératrice 2 autour d'un axe vertical V définissant un bas et un haut.

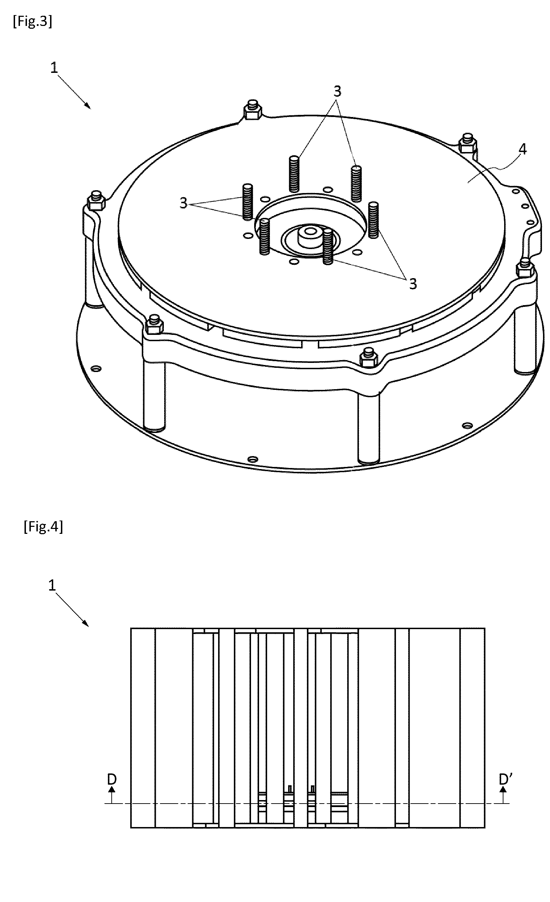

La figure 3 illustre un exemple de génératrice 2 comprenant vingt-quatre aimants mobiles 3 disposés sur un support 4. Selon d'autres formes de réalisation, un nombre plus important d'aimants mobiles 3 peut être fixé à la génératrice 2.

Visible aux figures 1 et 2, une turbine 5 forme un premier anneau autour de la génératrice 2. La turbine 5 comprend un ensemble de pales radiales mobiles 6 disposées radialement autour de la génératrice 2. Les pales radiales mobiles 6 sont comprises dans une enveloppe formant un cylindre creux fermé à ses deux extrémités.

Les pales radiales mobiles 6 sont de forme allongée verticales dont l'extrémité basse est fixée à un support de la turbine 5. La turbine 5 est un monobloc en mouvement qui entraîne la génératrice 2.

Est également visible aux figure 1 et 2, un périphérique 7 formant un deuxième anneau autour du premier qui comprend un ensemble de pales radiales fixes 8 disposées radialement par rapport à la génératrice 2. Les pales radiales fixes 8 sont comprises dans une enveloppe formant un cylindre creux.

Les pales radiales fixes 8 sont également de forme allongée verticales dont une extrémité basse est fixée à un anneau fixe bas de la structure du périphérique 7 et l'extrémité haute est fixée à un disque haut de la structure du périphérique 7 qui protège avantageusement l'éolienne 1. Le périphérique 7 est un monobloc fixe de l'éolienne 1.

Selon la forme de réalisation illustrée, les pales radiales 6,8 sont toutes espacées régulièrement. Cela permet d'assurer la régularité dans la rotation de la turbine 5.

Les pales radiales fixes 8 et mobiles 6 sont de hauteur différente, notamment afin de prévoir un espace sous les pales radiales mobiles 6 pour l'assemblage de l'éolienne 1.

Selon la forme de réalisation illustrée, l'éolienne 1 comprend douze pales fixes 8 et douze pales mobiles 6. Selon la puissance voulue et donc selon le choix du dimensionnement de la génératrice 2, l'éolienne 1 comprend un nombre plus élevé de pales radiales fixes 8 et mobiles 6, le nombre de pales radiales fixes 8 et de pales radiales mobiles 6 restant identiques.

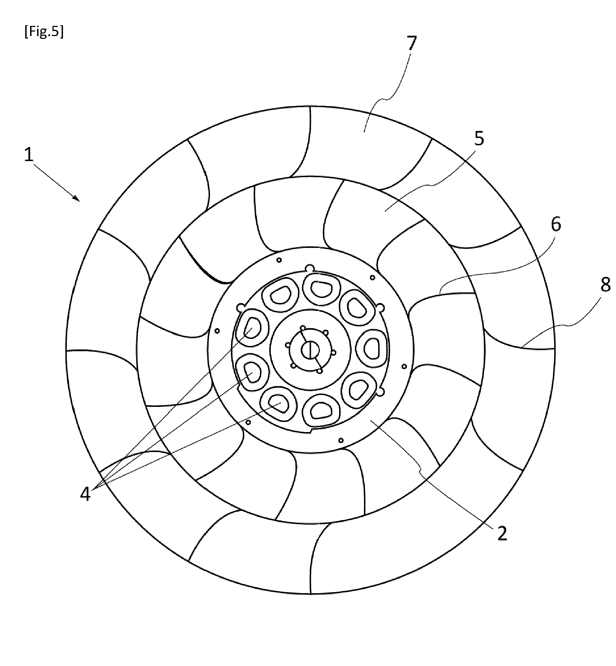

La figure 4 présente une coupe selon l'axe DD' de l'éolienne 1 au niveau de la génératrice 2. Cette coupe selon DD' est présentée à la figure 5. Neuf bobines 4 fixes figurent ainsi au centre de la génératrice 2 de l'éolienne 1 et sont entourées par la turbine 5 puis le périphérique 7.

Plus le diamètre de la turbine 5 est grand, plus la turbine 5 tourne lentement. Le flux du vent circulant sur le périmètre médian de la génératrice 2 garde sa propre vitesse. Le nombre de tours par minute obtenu pour une vitesse de vent donnée devra correspondre avec le nombre de tours par minute de la génératrice 2 pour une puissance en watts par heure désirée. Le freinage de la génératrice 2 en charge empêchera la génératrice 2 de s'emballer et maintiendra une vitesse de rotation dite confortable.

Le diamètre choisi de la turbine 5 préserve un bras de levier suffisant. Le but étant de coordonner la plage de vitesse des vents moyens, celle de la vitesse de rotation de la turbine 5 et celle de la rotation de la génératrice 2 pour avoir une progression linéaire de la puissance dégagée par la génératrice 2 lorsque la vitesse du vent augmente.

Chaque pale radiale mobile 6 de la turbine 5 utilise la pression sur la paroi interne de son profil pour avancer. Le flux d'air qui est destiné à chaque pale radiale mobile 6 est concentré et dirigé à l'endroit précis optimal sans perte de charge.

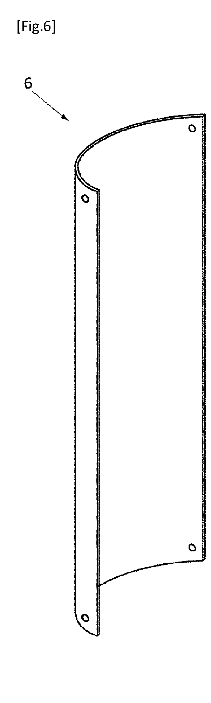

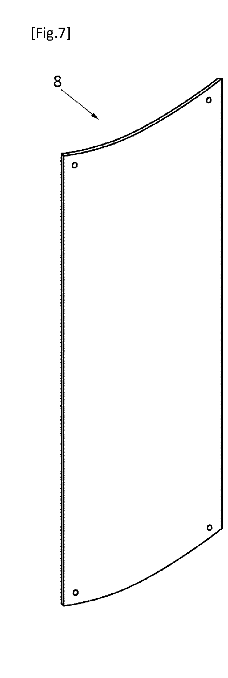

Les pales radiales mobiles 6 et les pales radiales fixes 8 sont illustrées respectivement aux figures 6 et 7. Selon ces exemples de réalisations lesdites pales radiales 6,8 ont une forme rectangulaire présentant un profil courbé. Ces deux profils ont été choisis pour maximiser la captation du vent ou fluide actionnant l'éolienne 1.

Les pales radiales fixes 8 ont un profil creux. Ce profil creux est un profil de captation lent et puissant.

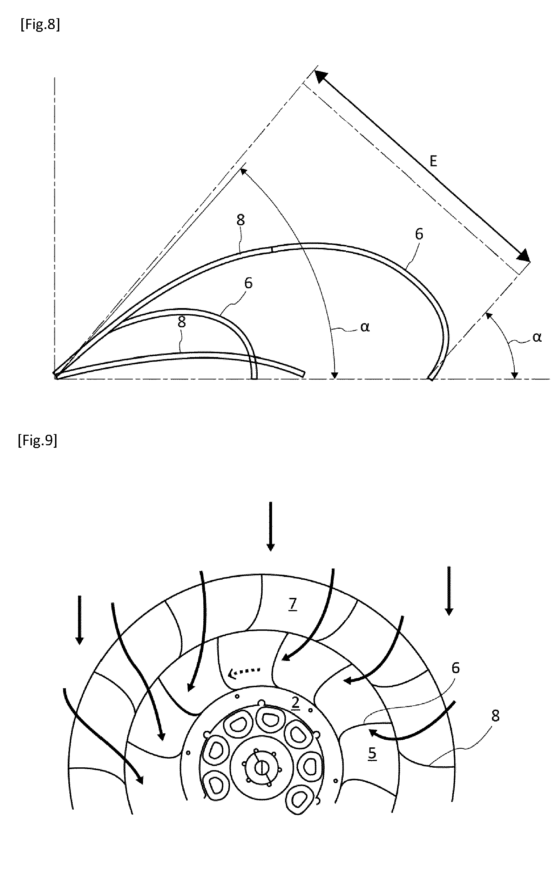

La figure 8 illustre une courbe mathématique sur laquelle s'appuie le profil des pales radiales fixes 8 et mobiles 6. Cette courbe est comprise dans une section d'angle α sensiblement égale à 47.5°. Les pales radiales 6,8 sont conçu en scindant cette forme mathématique en deux parties, la partie la plus creusée forme une pale radiale mobiles 6 et la partie présentant une moindre courbure forme une pale radiale fixe 8.

Les deux sens de courbure de chacune des pales radiales 6,8 sont ensuite inversés de manière à favoriser la captation du fluide tels qu'ils sont visibles sur les figures de coupe de l'exemple de réalisation de l'éolienne 1.

L'arc de cercle d'une pale mobile 6 est de même longueur que l'arc de cercle d'une pale fixe 8.

Des tests ont été effectués pour démontrer l'efficacité de cette forme particulière qui permet de concevoir les deux types de pales radiales 6,8 décrites plus haut.

Cette forme mathématique particulière illustrée à la figure 8 permet également de définir l'espace E optimisé entre deux pales radiales 6,8. Préférentiellement, l'espacement E entre chaque pale radiale mobile 6 est sensiblement le même sur la turbine 5.

L'éolienne 1 comprend un support inférieur et supérieur. Le carénage créé par les supports supérieur et inférieur joue un rôle important en empêchant l'air de s'échapper verticalement. L'espace E entre deux pales radiales fixes 8 du périphérique 7 et les supports inférieur et supérieur de l'éolienne 1 forme un caisson qui concentre les flux d'air exactement au creux des pales radiales mobiles 6.

La figure 9 représente schématiquement, le mouvement de l'éolienne 1. Les flèches pleines représentent le vent (cela peut également correspondre à d'autres fluides). Le sens de mouvement des pales radiales mobiles 6 est donné par la flèche pointillée. Avantageusement, la totalité de la surface de l'éolienne 1 exposée au vent est active et capte toute l'énergie du moindre filet d'air accroissant ainsi le rendement de l'éolienne 1.

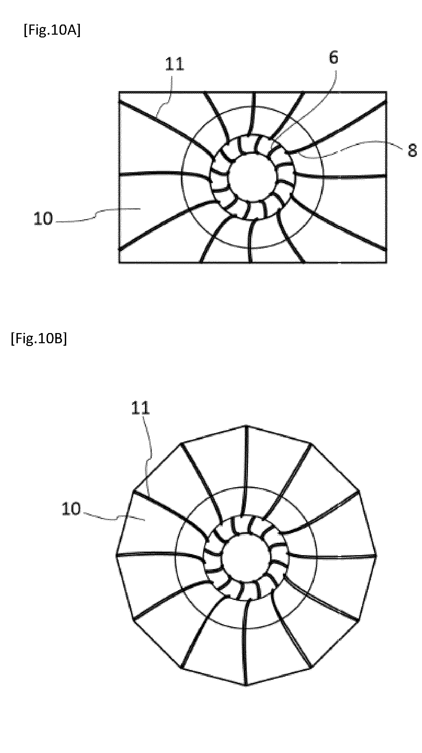

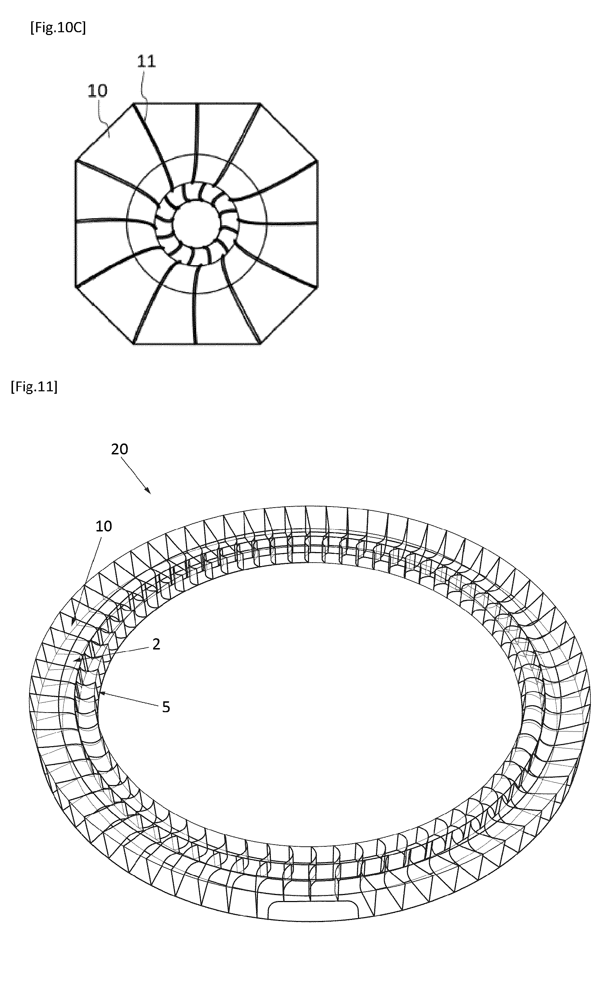

Selon une forme de réalisation de l'invention, l'éolienne 1 comprend en outre une extension 10. Cette extension 10 est une prolongation du périphérique 8. Les figures 10A, 10B et 10C illustrent des variantes de réalisation d'une extension 10 conforme à l'invention. D'autres formes de réalisation sont également possibles, l'extension 10 permettant de mieux capter un fluide. Pour ce faire, l'extension 10 comprend des pales supplémentaires 11 qui sont un prolongement droit des pales radiales fixes 8. Les pales supplémentaires 11 ont donc la forme d'un panneau plat de même hauteur que les pales radiales fixes 8.

L'entraînement des pales radiales mobiles 6 induit la rotation de la génératrice 2 qui entraine les aimants 3. Ce mouvement à proximité des bobines 4 crée un courant électrique. Selon l'exemple de réalisation illustré, les vingt-quatre aimants mobiles 3 et les douze bobines fixes 4 permettent de convertir le mouvement rotatif de la turbine 5 en énergie électrique. Le courant produit est un courant alternatif triphasé. Le courant ainsi produit est transformé en courant continu par un régulateur (non représenté). Ensuite, le courant continu est transformé en courant alternatif par un onduleur (non représenté) pour une consommation directe ou une revente au réseau. Cette forme de réalisation n'est pas limitante pour l'invention.

Une génératrice 2 compatible avec l'invention comprend des aimants permanents et fonctionne grâce à l'induction produite dans un bobinage 4 passant entre au moins deux aimants 3. La génératrice 2 ne nécessite donc pas de charbons. Il s'agit du même principe qu'un « moteur brushless ». Selon le nombre relatifs bobinages et aimants, le courant alternatif produit par la génératrice 2 pourra être soit triphasé soit monophasé.

Une éolienne 1 domestique selon l'invention produit 3 à 5 Kilowatt par jour posée à plat ou en faitière sur un toit ou sur un court pylône dans un jardin.

Le système de fonctionnement d'une centrale 20 selon l'invention est le même que le système de fonctionnement d'une éolienne 1. Il s'agit d'une homothétie notamment des dimensions d'une éolienne 1.

Dans une centrale 20, le nombre de génératrices 2 augmente et lesdites génératrices 2 sont décentrées par rapport au système éolien précédemment décrit. Cela permet notamment de libérer la place centrale de la centrale 20.

Ainsi, l'invention est aussi appliquée pour de grandes dimensions permettant la multiplication des génératrices 2 qui sont alors entrainées par une turbine 5 surdimensionnée. Les pales mobiles 6 de la génératrice 2 sont alors reliées sur un rail circulaire de la turbine 5. Les génératrices 2 constituent un chemin de roulement circulaire fixe positionné sous le rail des pales mobiles 6.

L'entrainement des génératrices 2 par les pales mobiles 6 se fait de manière asynchrone quelle que soit la disposition des génératrices 2 par rapport au rail.

Avantageusement, en augmentant le nombre de pales on passe d'une disposition des pales mobiles 6 et fixes 8 sur deux plateaux tels que décrit pour l'éolienne 1 à une disposition des pales mobiles 6 et fixes 8 sur deux couronnes telles qu'elles sont visibles à la figure 11. L'espace central est ainsi libéré.

Selon l'exemple illustré à la figure 11, la centrale 20 comprend 120 pales mobiles 6 montées sur un rail de la turbine 5 et 120 pales fixes 8.

Une centrale 20 comprend le même profil de pales mobiles 6 et fixes 8 qu'une éolienne 1.

Les pales fixes 8 et mobiles 6 sont de hauteur différente afin notamment de prévoir un chemin de roulement pour la centrale 20.

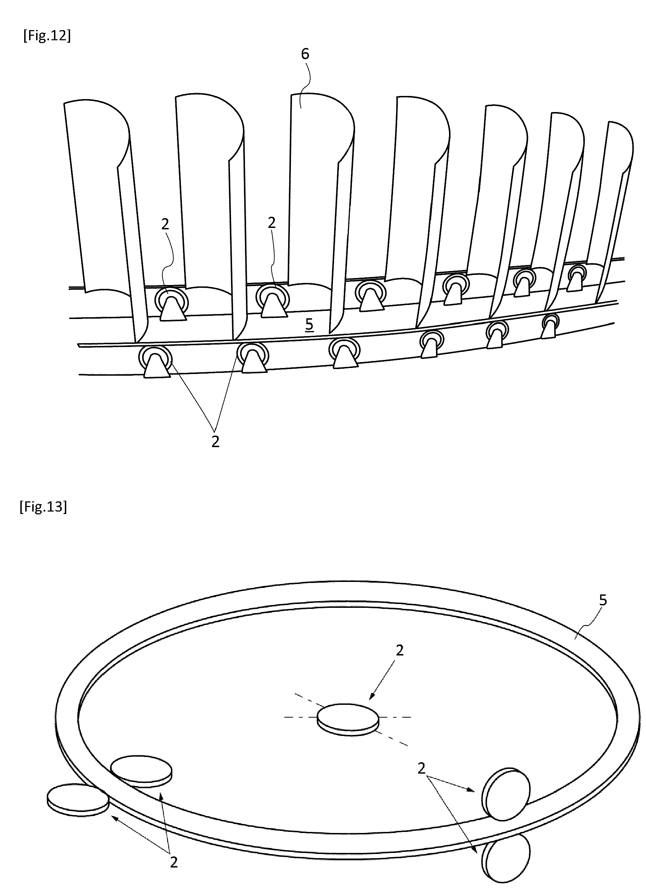

Telles qu'illustrées à la figure 12, les pales mobiles 6 situées sur la turbine 5 empêchent le flux d'air de s'échapper. Et, le flux d'air est canalisé de tous côtés par les pales fixes 8 (non représentées).

La centrale 20 peut également comprendre une extension 10. Les pales radiales fixes 8 sont ainsi de deux types, à savoir, des pales fixes profilées qui transforment progressivement les flux d'air linéaires en flux d'air rotatifs et des pales supplémentaires 11 (qui revêtent une forme sensiblement planes) qui vont augmenter la surface de captage de l'air en harmonie avec les mouvements du relief et le plan sur lequel est positionné l'éolienne 1. Par exemple au sommet d' un toit ou d'une colline, l'extension 10 aura la forme d'un demi-diabolo pour bloquer les flux de pente.

Pour une centrale 20, la position des génératrices 2 par rapport à la turbine 5 diffère. Le nombre et la position des génératrices 2 est variable pour permettre une homothétie horizontale. La figure 13 illustre des possibilités de dispositions des génératrices 2 par rapport à la turbine 5. En effet, diverses architectures de disposition de génératrices 2 sur la turbines 5 sont possibles pour une centrale 20 selon l'invention.

Bien entendu, diverses autres modifications peuvent être apportées à l'invention dans le cadre des revendications annexées.

## Revendications

1. Eolienne (1) à axe vertical comprenant :
- une génératrice (2) comprenant un axe de rotation central définissant l'axe vertical (V) apte à entraîner dans son mouvement rotatif un ensemble d'aimants (3) sur un ensemble de bobines (4),
- une turbine (5) apte à entraîner la génératrice (2), ladite turbine (5) ayant la forme d'un premier anneau autour de la génératrice (2) comprenant un ensemble de pales radiales mobiles (6) qui s'étendent depuis la génératrice (2),
- un périphérique (7) ayant la forme d'un deuxième anneau entourant le premier anneau comprenant un ensemble de pales radiales fixes (8) qui s'étendent depuis la turbine (5), l'éolienne à axe vertical dans laquelle les pales radiales mobiles (6) sont disposées radialement avec un angle de courbure opposé aux pales radiales fixes (8) également disposées radialement, les pales radiales mobiles (6) et fixes (8) ont la forme d'un panneau rectangulaire présentant un profil régulier courbé et creux, et les profils mis bout à bout d'une pale radiale fixe (8) et d'une pale radiale mobile (6) suit une courbe mathématique convexe continue avec le profil des pales radiales mobiles (6) présentant un angle de courbure progressif plus important que le profil des pales radiales fixes (8) avec un angle de courbure inversé.

2. Eolienne (1) selon la revendication précédente dans laquelle le nombre de pales radiales fixes (8) est identique au nombre de pales radiales mobiles (6).

3. Eolienne (1) selon l'une des revendications précédentes comprenant douze pales radiales mobiles (6).

4. Eolienne (1) selon l'une des revendications précédentes dans laquelle l'écartement entre deux pales radiales (6,8) successives correspond à la distance obtenue pour le point le plus haut de ladite courbe.

5. Eolienne (1) selon l'une des revendications précédentes dans laquelle les pales radiales mobiles (6) et fixes (8) ont la même longueur et sensiblement la même hauteur.

6. Eolienne (1) selon l'une des revendications précédentes comprenant en outre une extension (10) formant une structure autour du périphérique (7) et comprenant des pales supplémentaires fixes (11) dans la continuité de chacune des pales radiales fixes (8).

7. Centrale (20) d'énergie comprenant un ensemble de pales radiales fixes (8) et mobiles (6) montées sur un rail d'une turbine (5) circulaire, ledit rail circulant sur un chemin de roues munies chacune d'une génératrice (2), les pales radiales mobiles (6) et fixes (8) ont la forme d'un panneau rectangulaire présentant un profil régulier courbé et creux, et les profils mis bout à bout d'une pale radiale fixe (8) et d'une pale radiale mobile (6) suit une courbe mathématique convexe continue avec le profil des pales radiales mobiles (6) présentant un angle de courbure progressif plus important que le profil des pales radiales fixes (8).

## Patentansprüche

1. Windkraftanlage (1) mit vertikaler Achse, umfassend:
- einen Generator (2), umfassend eine zentrale Drehachse, die die vertikale Achse (V) definiert, die geeignet ist, in ihrer Drehbewegung eine Anordnung von Magneten (3) auf einer Anordnung von Spulen (4) anzutreiben,
- eine Turbine (5), die geeignet ist, den Generator (2) anzutreiben, wobei die Turbine (5) die Form eines ersten Rings um den Generator (2) vorweist, umfassend eine Anordnung von beweglichen radialen Schaufeln (6) umfasst, die sich von dem Generator (2) erstrecken,
- eine Peripherievorrichtung (7), die die Form eines zweiten Rings vorweist, der den ersten Ring umgibt, umfassend eine Anordnung von festen radialen Schaufeln (8), die sich von der Turbine (5) erstrecken, die Windkraftanlage mit vertikaler Achse, in der bewegliche radiale Schaufeln (6) mit einem Krümmungswinkel entgegengesetzt zu den festen radialen Schaufeln (8), die ebenfalls radial eingerichtet sind, radial eingerichtet sind, wobei die beweglichen (6) und die festen (8) radialen Schaufeln die Form einer rechteckigen Platte, die ein regelmäßiges gekrümmtes und hohles Profil aufweist, vorweisen, und die aneinandergefügten Profile einer festen radialen Schaufel (8) und einer beweglichen radialen Schaufel (6) einer kontinuierlichen konvexen mathematischen Kurve folgen, wobei das Profil der beweglichen radialen Schaufeln (6) einen progressiv größeren Krümmungswinkel als das Profil der festen radialen Schaufeln (8) mit einem umgekehrten Krümmungswinkel aufweist.

2. Windkraftanlage (1) nach dem vorstehenden Anspruch, wobei die Anzahl von festen radialen Schaufeln (8) identisch mit der Anzahl von beweglichen radialen Schaufeln (6) ist.

3. Windkraftanlage (1) nach einem der vorstehenden Ansprüche, umfassend zwölf bewegliche radiale Schaufeln (6).

4. Windkraftanlage (1) nach einem der vorstehenden Ansprüche, wobei der Abstand zwischen zwei aufeinanderfolgenden radialen Schaufeln (6, 8) der Entfernung entspricht, die für den höchsten Punkt der Kurve erhalten wird.

5. Windkraftanlage (1) nach einem der vorstehenden Ansprüche, wobei die beweglichen radialen Schaufeln (6) und die festen radialen Schaufeln (8) die gleiche Länge und im Wesentlichen die gleiche Höhe vorweisen.

6. Windkraftanlage (1) nach einem der vorstehenden Ansprüche, ferner umfassend eine Erweiterung (10), die eine Struktur um die Peripherie (7) ausbildet und umfassend zusätzliche feste Schaufeln (11) in der Kontinuität jeder der festen radialen Schaufeln (8).

7. Kraftwerksanlage (20), umfassend eine Anordnung von festen radialen Schaufeln (8) und beweglichen radialen Schaufeln (6), die auf einer Schiene einer kreisförmigen Turbine (5) montiert sind, wobei die Schiene auf einer Bahn von Rädern läuft, die jeweils mit einem Generator (2) versehen sind, wobei die beweglichen (6) und die festen (8) radialen Schaufeln die Form einer rechteckigen Platte, die ein regelmäßiges gekrümmtes und hohles Profil aufweist, vorweisen, und die aneinandergefügten Profile einer festen radialen Schaufel (8) und einer beweglichen radialen Schaufel (6) einer kontinuierlichen konvexen mathematischen Kurve folgen, wobei das Profil der beweglichen radialen Schaufeln (6) einen progressiv größeren Krümmungswinkel als das Profil der festen radialen Schaufeln (8) aufweist.

## Claims

1. Wind turbine (1) having a vertical axis, comprising:
- a generator (2) having a central rotational axis defining the vertical axis (V), which generator is capable of driving, in its rotary movement, an assembly of magnets (3) on an assembly of coils (4),
- a turbine (5) capable of driving the generator (2), said turbine (5) being in the shape of a first ring around the generator (2) and comprising an assembly of movable radial blades (6) extending from the generator (2),
- a periphery (7) in the shape of a second ring surrounding the first ring, and comprising an assembly of fixed radial blades (8) extending from the turbine (5), in which vertical-axis wind turbine the movable radial blades (6) are arranged radially at an angle of curvature, opposite the fixed radial blades (8) which are also arranged radially, the movable radial blades (6) and fixed radial blades (8) are in the shape of a rectangular panel having a regular curved and hollow profile, and the profiles of a fixed radial blade (8) and a movable radial blade (6), which profiles have been placed end-to-end, follow a continuous convex mathematical curve, the profile of the movable radial blades (6) having a greater progressive angle of curvature than the profile of the fixed radial blades (8) having an inverted angle of curvature.

2. Wind turbine (1) according to the preceding claim, wherein the number of fixed radial blades (8) is identical to the number of movable radial blades (6).

3. Wind turbine (1) according to either of the preceding claims, comprising twelve movable radial blades (6).

4. Wind turbine (1) according to any of the preceding claims, wherein the spacing between two successive radial blades (6,8) corresponds to the distance obtained for the highest point of said curve.

5. Wind turbine (1) according to any of the preceding claims, wherein the movable radial blades (6) and fixed radial blades (8) are the same length and substantially the same height.

6. Wind turbine (1) according to any of the preceding claims, further comprising an extension (10) forming a structure around the periphery (7) and comprising additional fixed blades (11) in continuity with each of the fixed radial blades (8).

7. Power plant (20) comprising an assembly of fixed radial blades (8) and movable radial blades (6) mounted on a rail of a circular turbine (5), said rail traveling on a track of wheels, each wheel provided with a generator (2), the movable radial blades (6) and fixed radial blades (8) are in the shape of a rectangular panel having a regular curved and hollow profile, and the profiles of a fixed radial blade (8) and a movable radial blade (6), which profiles have been placed end-to-end, follow a continuous convex mathematical curve, the profile of the movable radial blades (6) having a greater progressive angle of curvature than the profile of the fixed radial blades (8).
